# EUROPÄISCHE PATENTSCHRIFT

(11) **EP 0 947 308 B1**
(45) Veröffentlichungstag und Bekanntmachung des Hinweises auf die Patenterteilung: **29.01.2003**
(21) Anmeldenummer: 99105329.9
(22) Anmeldetag: 16.03.1999
(51) Int. Cl.: B29C 53/56, F16F 7/12

(54) **Verfahren zum Herstellen von energieabsorbierenden Strukturelementen**
Method for producing energy absorbing structural members
Procédé de fabrication d'éléments structurels absorbeurs d'énergie

(30) Priorität: 28.03.1998 DE 19813998
(43) Veröffentlichungstag der Anmeldung: 06.10.1999
(73) Patentinhaber: Deutsches Zentrum für Luft- und Raumfahrt e.V., 51147 Köln (DE)
(72) Erfinder: Kindervater, Christof, 70563 Stuttgart (DE)
(74) Vertreter: Hoeger, Stellrecht & Partner

(56) Entgegenhaltungen:
- EP-A- 0 593 337
- EP-A- 0 829 662
- FR-A- 2 516 859
- GB-A- 844 536
- US-A- 5 419 416
- US-A- 5 665 192

## Beschreibung

Die Erfindung betrifft ein Verfahren zum Herstellen von mit definierter Charakteristik energieabsorbierenden Strukturelementen, welche als zur Energieabsorption in Richtung ihrer Längsachsen aufreißenden Formkörper aus einem Matrixmaterial und einem in diesem eingebetteten Verstärkungsmaterial so hergestellt werden, daß in unterschiedlichen Bereichen des Formkörpers definiert zu diesem verlaufende und mit definiert unterschiedlicher Anzahl angeordnete Lagen des Verstärkungsmaterials angeordnet werden, und daß das Verstärkungsmaterial für den gesamten Formkörper in einem Wickelvorgang zu dem Formkörper gewickelt wird.

Die US-A-5,419,416 offenbart zwar die Herstellung eines Formkörpers mit Bereichen unterschiedlicher Dicke, allerdings wird hierzu ein Roving zugeführt und durch unterschiedliche Zahl der Windungen der einzelnen Fasern beim Aufwickeln eine unterschiedliche Dicke erreicht oder durch nachträgliches Abtragen des bereits gewickelten Formkörpers.

Ausgehend von den bekannten Lösungen liegt der Erfindung die Aufgabe zugrunde, ein Verfahren zum Herstellen eines Energie absorbierenden Struk-Strukturelements zu schaffen, mit welchem in einfacher Weise eine Energieabsorption definierter Charakteristik realisierbar ist.

Diese Aufgabe wird bei einem Verfahren der eingangs beschriebenen Art erfindungsgemäß dadurch gelöst, daß das Verstärkungsmaterial dem Wickelvorgang in Form eines einzigen in einem einzigen Wickelvorgang zu einem der Formkörper zu wickelnden Flachmaterialstücks zugeführt wird und daß das den Formkörper ergebende Flachmaterialstück mit einer einen Abschnitt mit maximaler Breite quer zur Wickelrichtung und mindestens einen Abschnitt mit geringerer Breite quer zur Wickelrichtung aufweisenden Kontur versehen wird, so daß durch diese Kontur in dem Formkörper nach dem Wickelvorgang der geforderte definierte Verlauf der Lagen und die definiert unterschiedliche Anzahl der Lagen vorliegen.

Der Vorteil des erfindungsgemäßen Verfahrens ist darin zu sehen, daß einerseits eine definierte Energieabsorptionscharakteristik des Strukturelements herstellbar ist und daß andererseits ein derartiges komplexes Strukturelement sehr einfach, nämlich durch einen einzigen Wickelvorgang herstellbar ist.

Ein derartiger Formkörper läßt sich in unterschiedlicher Art und Weise, beispielsweise durch einen Wickelvorgang mit Mehrfachzufuhr von Flachmaterialstücken herstellen.

Dadurch, daß das Verstärkungsmaterial dem Wickelvorgang in Form eines einzigen Flachmaterialstücks zugeführt wird, das derart konturiert wird, daß in dem Formkörper nach dem Wickelvorgang der geforderte definierte Verlauf der Lagen und die definiert unterschiedliche Anzahl der Lagen vorliegen, resultiert der Vorteil, daß der geforderte Verlauf und insbesondere die in unterschiedlichen Bereichen unterschiedliche Anzahl von Lagen durch die Kontur des Flachmaterialstücks definiert werden, so daß beim Wickelvorgang auf die Unterschiede in den einzelnen Bereichen keine Rücksicht genommen werden muß.

Ferner hat dieses Verfahren den Vorteil, daß in einfacher Weise auch die Zahl der in den einzelnen Bereichen vorhandenen Lagen geändert werden kann, nämlich einfach durch Änderung der Kontur des Flachmaterialstücks.

Für das Erreichen einer definierten Charakteristik der Energieabsorption sieht ein Grundmuster derartiger konturierter Flachmaterialstücke vor, daß das Flachmaterialstück einen Abschnitt mit maximaler Breite quer zur Wickelrichtung und mindestens einen Abschnitt mit geringerer Breite quer zur Wickelrichtung aufweist. Eine derartige Kontur kann beispielsweise keilähnlich oder stufenähnlich sein und schafft die Möglichkeit, mit dem Abschnitt maximaler Breite quer zur Wickelrichtung Lagen zu erzeugen, welche sich im wesentlichen über die gesamte Länge des Formkörpers in Richtung der Wickelachse erstrecken und dann zusätzliche Lagen, welche beispielsweise als Verstärkungslage dienen, so daß Bereiche mit einer größeren Anzahl von Lagen und Bereiche mit einer geringeren Anzahl von Lagen entstehen, bei deren Reißen dann auch unterschiedlich große Kräfte auftreten und somit Energie in unterschiedlichem Maße absorbiert wird.

Die Konturierung des Flachmaterialstücks kann zu unterschiedlichen Zeitpunkten erfolgen. So sieht vorteilhafterweise ein Ausführungsbeispiel des erfindungsgemäßen Verfahrens vor, daß das Flachmaterialstück im Verlauf der Zufuhr einer Flachmaterialbahn zu dem Wickelvorgang in dem die Bereiche mit definiert unterschiedlicher Anzahl von Lagen beeinflussenden Abschnitt konturiert wird, das heißt, daß beispielsweise durch Ausschneiden der Kontur aus der Flachmaterialbahn bei Zufuhr derselben zum Wickelvorgang das Flachmaterialstück entsteht.

Eine andere alternative Lösung sieht vor, daß das Flachmaterialstück vor der Zufuhr zu dem Wickelvorgang in dem die Bereiche mit definiert unterschiedlicher Anzahl von Lagen beeinflussenden Abschnitt konturiert wird, das heißt, das fertig konturierte Flachmaterialstücke einzeln hintereinander den unterschiedlichen Wickelvorgängen zugeführt werden.

Das Konturieren der Flachmaterialstücke, beispielsweise ausgehend von einer Flachmaterialbahn, kann in einfacher Weise dadurch erfolgen, daß das Flachmaterialstück durch einen Schneidvorgang konturiert wird.

Dieser Schneidvorgang kann ein derartiger Schneidvorgang sein, daß mit einem Schneidmesser der auszuschneidenden Kontur gefolgt wird.

Es ist aber auch möglich, den Schneidvorgang derart durchzuführen, daß mit einem Stanzmesser zumindest zusammenhängende Teile der Kontur ausgeschnitten werden.

Das erfindungsgemäße Verfahren läßt sich besonders ökonomisch dann durchführen, wenn das Verstärkungsmaterial so gewickelt wird, daß eine maximale Erstreckung des konturierten Flachmaterialstücks in Richtung einer Wickelachse der maximalen Erstreckung des Formteils in Richtung der Wickelachse entspricht, das heißt, daß die Zufuhrrichtung des Flachmaterialstücks im wesentlichen einen rechten Winkel mit der Wickelachse einschließen kann und somit eine besonders schnelle Zufuhr des Flachmaterialstücks zum Wickelvorgang möglich ist.

Besonders ökonomisch läßt sich das Wickeln von Formkörpern dann gestalten, wenn mehrere Flachmaterialstücke parallel dem Wickelvorgang zugeführt werden und somit mehrere Formkörper gleichzeitig aus den Flachmaterialstücken gewickelt werden können. Dies ist insbesondere für eine Serienproduktion oder Großserienproduktion von erheblichem Vorteil.

Besonders günstig läßt sich die Zufuhr mehrerer Flachmaterialstücke zu dem Wickelvorgang dann gestalten, wenn die mehreren Flachmaterialstücke als zusammenhängende Flachmaterialstückanordnung dem Wickelvorgang zugeführt werden können, da damit durch das Zusammenhängen der verschiedenen Flachmaterialstücke eine parallele Zufuhr in einfacher Weise gewährleistet werden kann und somit auch die Vorrichtung für die Zufuhr der mehreren Flachmaterialstücke möglichst einfach ausgebildet sein kann.

Die mehreren Flachmaterialstücke könnten prinzipiell in allen Abschnitten zusammenhängend ausgebildet sein. Besonders günstig für das Trennen der entstehenden Formkörper ist es, wenn die mehreren Flachmaterialstücke im Bereich der Abschnitte zusammenhängen, die in allen Bereichen des Formkörpers die Zahl der Lagen in gleicher Weise erhöhen.

Insbesondere ist im Fall von Flachmaterialstücken, die einen Abschnitt maximaler Breite aufweisen, vorgesehen, daß die Flachmaterialstücke im Abschnitt maximaler Breite zusammenhängen. Dabei können die Flachmaterialstücke beispielsweise im gesamten Abschnitt maximaler Breite zusammenhängend ausgebildet sein. Es besteht aber auch die Möglichkeit, daß die Flachmaterialstücke lediglich über Stege zusammenhängen, so daß sich die späteren Formkörper leichter trennen lassen.

Die Einbettung des Verstärkungsmaterials in das Matrixmaterial kann in unterschiedlichster Art und Weise erfolgen. Beispielsweise wäre es denkbar, zunächst das Verstärkungsmaterial zu wickeln und nachträglich nach dem Wickeln das Matrixmaterial aufzutragen. Dies würde jedoch die Geschwindigkeit bei der Herstellung der erfindungsgemäßen Formteile beeinträchtigen. Aus diesem Grund sieht ein besonders vorteilhaftes Ausführungsbeispiel vor, daß das Verstärkungsmaterial mit dem Matrixmaterial vor dem Wickeln des Verstärkungsmaterials zum Formkörper imprägniert wird, so daß bei dem Wickeln nicht nur das Verstärkungsmaterial in den Formkörper geformt wird, sondern gleichzeitig die Zufuhr des Matrixmaterials erfolgt.

Bei mit der Zufuhr von mit Matrixmaterial imprägniertem Verstärkungsmaterial ist es besonders günstig, wenn das Wickeln bei fließ- oder tränkfähigem Matrixmaterial durchgeführt wird, so daß das Wickeln des Verstärkungsmaterials zum Formkörper gleichzeitig dazu eingesetzt werden kann, das Verstärkungsmaterial mit den verschiedenen Lagen voll in das gesamte Matrixmaterial einzubetten, da das fließende Matrixmaterial die gewünschte Einbettung des Verstärkungsmaterials in dieses erlaubt.

Beispielsweise wäre dies dadurch möglich, daß das Matrixmaterial als fließ- oder tränkfähiges Material mit dem Verstärkungsmaterial zugeführt wird, dies hat jedoch Nachteile bei der Handhabung des Verstärkungsmaterials bei der Zufuhr zum Wickeln.

Aus diesem Grund ist vorzugsweise vorgesehen, daß das Matrixmaterial beim Wickeln tränkfähig wird, das heißt also entweder im Falle eines Duroplasten durch Erwärmen flüssiger wird oder im Fall eines Thermoplasten durch Erhitzen auf den Schmelzpunkt erschmolzen wird.

Im Fall eines thermoplastischen Materials ist vorgesehen, daß das Matrixmaterial während des gesamten Wickelns auf Schmelztemperatur gehalten wird.

Dies wäre einerseits dadurch möglich, daß das Matrixmaterial vor dem Wickeln, beispielsweise während der Zeit während der ' es dem Verstärkungsmaterial zugeführt wird, auf Schmelztemperatur erwärmt wird.

Eine besonders vorteilhafte Lösung vermeidet jedoch das Erwärmen des Matrixmaterials auf Schmelztemperatur vor dem Wickeln, sondern sieht vor, daß das Matrixmaterial beim Wickeln auf Schmelztemperatur erwärmt wird.

Eine Möglichkeit ist eine Erwärmung über externe Wärmezufuhr, wie z. B. Heißluft, elektromagnetische Strahlung oder Gasflamme.

Alternativ oder ergänzend ist vorgesehen, daß das Matrixmaterial durch eine aufgeheizte Wickelhülse auf Schmelztemperatur erwärmt und auf dieser gehalten wird.

Besonders schnell läßt sich der Wickelvorgang dann durchführen, wenn die Wickelhülsen vor dem Wickeln auf die Schmelztemperatur des Matrixmaterials oder darüber aufgeheizt werden, so daß unmittelbar bei Kontakt des Verstärkungsmaterials mit dem imprägnierten Matrixmaterial dieses erschmolzen wird.

Günstigerweise ist dabei vorgesehen, daß die Wickelhülsen vor ihrem Einbringen in die Wickeleinrichtung aufgeheizt werden, so daß unmittelbar nach Einbringen einer Wickelhülse in die Wickeleinrichtung ein Aufwickeln des Verstärkungsmaterials mit Matrixmaterial erfolgen kann, ohne daß eine Aufheizzeit abgewartet werden muß.

Alternativ zum Vorsehen eines thermoplastischen Matrixmaterials sieht ein anderes Ausführungsbeispiel vor, daß das Matrixmaterial ein Duroplast ist.

In diesem Fall ist vorzugsweise vorgesehen, daß das Matrixmaterial beim Wickeln lediglich so weit erwärmt wird, daß dieses in ausreichendem Maße beim Wickeln des Verstärkungsmaterials flüssig ist.

Im Falle eines Duroplasten ist vorzugsweise vorgesehen, daß das Matrixmaterial im Formkörper nach dem Wickeln ausgehärtet wird, so daß eine ausreichende Aushärtezeit für das Matrixmaterial nach dem Wickeln vorgesehen sein muß.

Dies läßt sich besonders günstig dann durchführen, wenn das Matrixmaterial bei auf der Wickelhülse sitzendem Formkörper ausgehärtet wird, so daß die Wickelhülse beim Aushärten des Matrixmaterials die gewünschte Form vorgibt.

Um ausreichend hohe Durchlaufzeiten zu erreichen, ist vorzugsweise vorgesehen, daß die mit den Formkörpern bewickelten Wickelhülsen beim Aushärten des Matrixmaterials zu Wickelhülsengruppen zusammengefaßt werden, welche gemeinsam die Aushärtephase durchlaufen.

Bei allen möglichen Varianten des erfindungsgemäßen Verfahrens ist vorzugsweise vorgesehen, daß die Formkörper auf den Wickelhülsen sitzend abgekühlt werden und somit erst nach endgültigem Aushärten oder verfestigen des Matrixmaterials ein Ablösen der Formkörper von den Wickelhülsen erfolgt.

Dieses Ablösen der Formkörper von den Wickelhülsen läßt sich besonders dadurch durchführen, daß die Formkörper von den Wickelhülsen abgezogen werden.

Bei einer Durchführung der bislang beschriebenen Ausführungsbeispiele des erfindungsgemäßen Verfahrens, bei welchem mehrere Flachmaterialstücke zusammenhängend ausgebildet sind, kann die Trennung der daraus durch Wickeln hergestellten Formkörper in unterschiedlichster Art und Weise erreicht werden. Gemäß einer Variante wäre es denkbar, die Formkörper vor dem Aushärten, beispielsweise auf der Wickelhülse, zu trennen.

Alternativ dazu ist vorgesehen, die Formkörper nach dem Aushärten zu trennen.

Besonders günstig läßt sich dies dann durchführen, wenn die zusammenhängenden Formkörper nach dem Abziehen von den Wickelhülsen getrennt werden, da in diesem Fall eine einfache Trennung, beispielsweise durch Sägen, realisierbar ist.

Weitere Merkmale und Vorteile der erfindungsgemäßen Lösung sind Gegenstand der nachfolgenden Darstellungen einiger Ausführungsbeispiele erfindungsgemäßer Formkörper und einiger Ausführungsbeispiele von Verfahren zum Wickeln derartiger erfindungsgemäßer Formkörper.

In der Zeichnung zeigen:
- Fig. 1: einen Längsschnitt durch ein erstes Ausführungsbeispiel eines erfindungsgemäßen Formkörpers, eingesetzt in Anschlußbeschläge, welche bei Aufbringen einer Kraft auf diese ein energieabsorbierendes Zerstören des Formkörpers bedingen;
- Fig. 2: eine Darstellung der Zusammenhänge zwischen einem Flachmaterialstück zum Herstellen des Formkörpers gemäß dem ersten Ausführungsbeispiel, dem Formkörper und der Energieabsorptionscharakteristik mit dem noch nicht gewickelten Flachmaterialstück zum Herstellen des Formkörpers in Fig. 2a
dem aus Flachmaterialstück gewickelten Formkörper in Fig. 2b und
der Energieabsorptionscharakteristik in Fig. 2c;
- Fig. 3: eine Darstellung ähnlich Fig. 2 eines zweiten Ausführungsbeispiels eines erfindungsgemäßen Formkörpers mit:
dem noch nicht gewickelten Flachmaterialstück zur Herstellung dieses Formkörpers in Fig. 3a,
dem gewickelten Flachmaterialstück in Fig. 3b und
der Energieabsorptionscharakteristik in Fig. 3c;
- Fig. 4: eine Darstellung ähnlich Fig. 2 eines dritten Ausführungsbeispiels eines erfindungsgemäßen Formkörpers mit
dem noch nicht gewickelten Flachmaterialstück in Fig. 4a;
dem zum Formkörper gewickelten Flachmaterialstück in Fig. 4b und
der Energieabsorptionscharakteristik in Fig. 4c;
- Fig. 5: eine schematische Darstellung des ersten Ausführungsbeispiels eines erfindungsgemäßen Verfahrens zum Wickeln eines erfindungsgemäßen Formkörpers;
- Fig. 6: eine Ansicht einer Vorrichtung zum imprägnieren des Verstärkungsmaterials mit Matrixmaterial in Richtung des Pfeils A in Fig. 5;
- Fig. 7: eine schematische Darstellung einer Variante des ersten Ausführungsbeispiels der erfindungsgemäßen Verfahrens in Fig. 5;
- Fig. 8: eine Darstellung eines zweiten Ausführungsbeispiels eines erfindungsgemäßen Verfahrens;
- Fig. 9: eine Darstellung eines dritten Ausführungsbeispiels des erfindungsgemäßen Verfahrens und
- Fig. 10: eine Darstellung einer Aufteilung einer Flachmaterialbahn mit mehreren aufeinanderfolgenden Flachmaterialstückanordnungen.

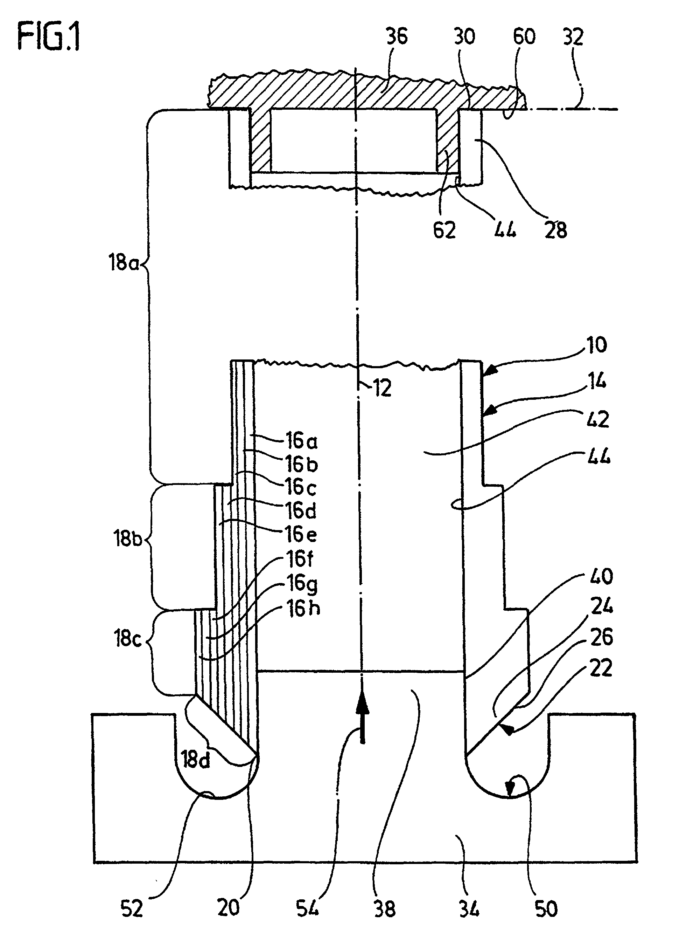

Ein in Fig. 1 dargestelltes Ausführungsbeispiel eines erfindungsgemäßen energieabsorbierenden Strukturelements 10 ist beispielsweise als zu einer Mittelachse 12 kreiszylindrischer Formkörper 14 aufgebaut, welcher mehrere Lagen 16a bis 16h eines ein Verstärkungsmaterial bildenden Flachmaterials aufweist, wobei beispielsweise in einem sich in Richtung der Mittelachse 12 erstreckenden ersten Bereich 18a nur drei Lagen 16a bis 16c von Flachmaterial vorgesehen sind, während in einem zweiten Bereich 18b fünf Lagen 16a bis 16e von Flachmaterial vorgesehen sind und in einem dritten Bereich 18c des Formkörpers 14 insgesamt acht Lagen 16a bis 16h des Flachmaterials vorgesehen sind. In einem letzten Bereich 18d
erstrecken sich die einzelnen Lagen des Flachmaterials in Richtung der Achse 12 über unterschiedliche Längen, wobei sich die unterste Lage 16a in Richtung der Mittelachse bis zu einer Endkante 20 des Formkörpers erstreckt und die darauffolgenden Lagen jeweils gegenüber der untersten Lage 16a zurückversetzt sind, so daß insgesamt eine Fase 22 des Formkörpers 14 im Bereich eines ersten Endes 24 des Formkörpers gebildet wird, wobei eine Oberfläche 26 der Fase 22 bezüglich der Mittelachse 12 eine Kegelfläche darstellt.

Ein zweites, dem ersten Ende 24 gegenüberliegendes Ende 28 des Formkörpers 14, von welchem der erste Bereich 18a ausgeht, weist dabei eine Stirnfläche 30 auf, welche in einer Ebene 32 liegt, die senkrecht zur Achse 12 verläuft.

Ein derartiges energieabsorbierendes Strukturelement 10 läßt sich beispielsweise zwischen zwei Anschlußbeschlägen 34 und 36 anordnen. Der die Energieabsorption auslösende erste Anschlußbeschlag 34 weist einen Führungsabschnitt 38 auf, der eine zylindrische Form hat und eine zur Achse 12 kreiszylindrische Mantelfläche 40. Der Führungsabschnitt 38 greift in einen Innenraum 42 des Formkörpers 14 ein und liegt dabei an einer den Innenraum begrenzenden, zur Achse 12 zylindrischen Innenfläche 44 des Formkörpers 14 an, so daß dieser in Richtung der Achse 12 geführt ist.

Der erste Anschlußbeschlag 34 weist ferner im Anschluß an den Führungsabschnitt 38 eine ringförmig um die Achse 12 herum verlaufende Rinne 50 auf, welche insbesondere eine an die Mantelfläche 40 angrenzende und bezüglich der Achse 12 radial nach außen verlaufende beispielsweise toroidförmige Grundfläche 52 aufweist. Wird nun der Formkörper 14 mit dem ersten Ende 24 auf den Führungsabschnitt 38 aufgeschoben, und zwar so weit, daß eine Endkante 20 nahe eines Beginns der toroidförmigen Fläche 52 der Rinne 50 liegt und sich an diese die Fase 22 anschließt, so wird bei einer Relativverschiebung des ersten Anschlußbeschlags 34 in Richtung des Pfeils 54 das mit der Fase 22 versehene erste Ende 24 des Formkörpers 14 in radialer Richtung zur Achse 12 gespreizt, so daß im Bereich der Fase 22 die Lagen 16a bis 16h des Verstärkungsmaterials in Richtung der Achse 12 verlaufende Risse erhalten und somit der Formkörper 14 im Bereich des ersten Endes 24 zerstört wird, beispielsweise aufreißt, und sich damit in radialer Richtung ausdehnt. Dieses Aufreißen in radialer Richtung durch Ausdehnen oder Spreizen des ersten Endes 24 des Formkörpers 14 absorbiert dann die gewünschte Energie, wobei sich das Aufreißen über dem Bereich 18d, den Bereich 18c und den Bereich 18b hinweg bis zum Bereich 18a fortpflanzen kann.

Um bei in Richtung des Pfeils 54 bewegtem Anschlußbeschlag 34 den Formkörper 14 am zweiten Ende 28 abzustützen, ist der zweite Anschlußbeschlag 36 mit einer zur Ebene 32 parallelen Auflagefläche 60 versehen, an welcher sich die Stirnfläche 30 des zweiten Endes 28 abstützt. Vorzugsweise ist der Formkörper 14 ferner noch im Bereich des zweiten Endes 28 durch einen an der Innenfläche 44 anliegenden Führungsring 62 gesichert.

Die Stabilität des Formkörpers 14 im ersten Bereich 18a muß dabei so groß sein, daß dieser Bereich in der Lage ist, die in Richtung der Achse 12 wirkenden Kräfte ohne einzuknicken aufzunehmen und mit der Stirnfläche 30 auf den Anschlußbeschlag 36 zu übertragen.

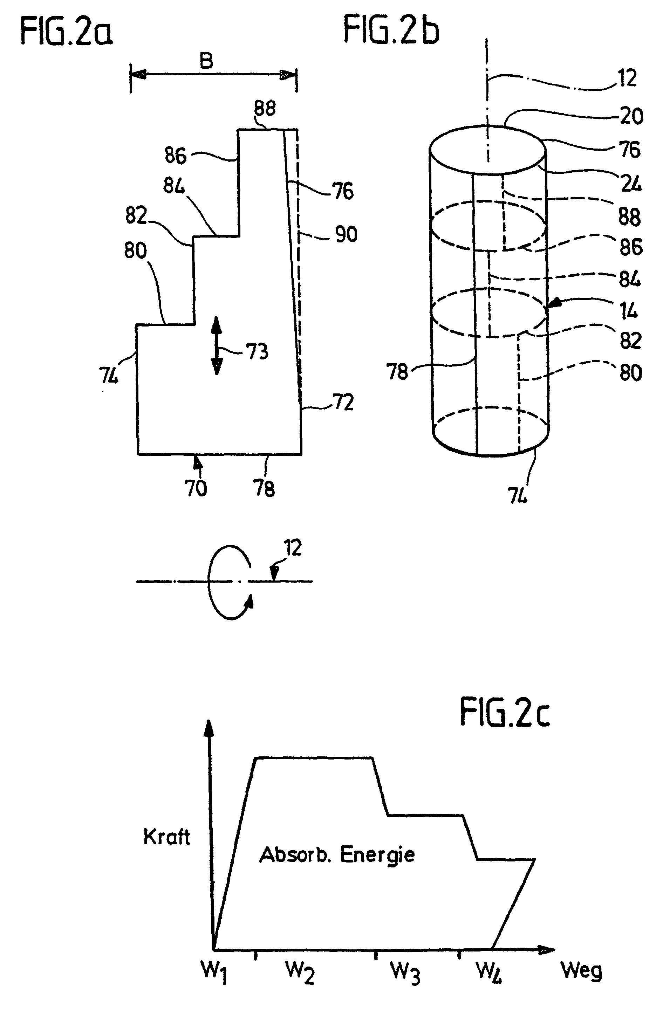

Ein derartiger, in Fig. 1 dargestellter Formkörper 14 läßt sich erfindungsgemäß, wie in Fig. 2 dargestellt, aus einem durch Zuschneiden mit einer definierten Außenkontur 70 versehenen Flachmaterialstück 72 aus Verstärkungsfasern umfassendem Verstärkungsmaterial herstellen, welches eine maximale Breite B in Richtung quer zu einer Hauptrichtung 73 des Verlaufs der Verstärkungsfasern und zu diesen ungefähr parallelen Längskanten 74, 76 aufweist, welche ungefähr der Erstreckung des Formkörpers 14 von der Endkante 20 bis zur Stirnfläche 30 entspricht.

Ferner verläuft die zweite Längskante 76 in Form einer durchgehenden Längskante von einer späteren wickelinneren Querkante 78, welche sich im wesentlichen über die gesamte Länge des Formkörpers 14 von der Endkante 20 bis zur Stirnfläche 30 erstreckt, bis zu einer späteren wickeläußeren Querkante 88.

Die erste Längskante 74 des Flachmaterialstücks 72 erstreckt sich ausgehend von der späteren wickelinneren Querkante 78 bis zu einer Stufenkante 80, welche quer zur Hauptrichtung 73 zu einer zurückgesetzten und zur Längskante 74 parallelen Längskante 82 verläuft, die gegenüber der Längskante 74 in Richtung der Längskante 76 versetzt ist und ihrerseits wieder bis zu einer quer zur Hauptrichtung 73 verlaufenden Stufenkante 84 verläuft und von welcher ausgehend dann eine weitere zurückgesetzte und zur Längskante 74 parallele Längskante 86 bis zu der späteren wickeläußeren Querkante 88 verläuft, die der späteren wickelinneren Querkante 78 gegenüberliegt.

Im Gegensatz zu den Längskanten 74, 82 und 86 verläuft die Längskante 76 stufenlos von der Querkante 78 bis zur Querkante 88.

Die Längskante 76 weicht dabei geringfügig von einer parallel zu den Längskanten 74, 82 und 86 verlaufenden fiktiven Querkante 90 ab und ist ausgehend von der späteren wickelinneren Querkante 78 mit zunehmender Erstreckung in Richtung der späteren wickeläußeren Querkante 88 so gelegt, daß sie einen zunehmenden Abstand von der fiktiven Längskante 90 aufweist (Fig. 2a).

Wird nun das Flachmaterialstück 72 so ausgerichtet, daß die Querkante 78 parallel zur Achse 12 verläuft und auf eine um die Achse 12 rotierende, zeichnerisch nicht dargestellte Wickelhülse aufgewickelt, so ergibt der die maximale Breite B aufweisende Abschnitt zwischen der Querkante 78 und der Stufenkante 80 die in Fig. 1 dargestellten ersten drei Lagen 16a bis 16c, welche sich im wesentlichen über die gesamte Länge des Formkörpers 14 in Richtung der Achse 12 erstrecken. Die Stufenkante 80 definiert dabei durch ihre Erstreckung in Richtung der Achse 12 die Erstreckung des Bereichs 18a in Richtung der Achse 12, welcher beispielsweise drei Lagen 16a bis 16c des Verstärkungsmaterials 70 aufweist.

Ein weiterer Abschnitt des Flachmaterialstücks 72 zwischen der Stufenkante 80 und der Stufenkante 84 bildet auf den ersten drei Lagen 16a bis c zwei zusätzliche Lagen 16d und 16e in den Bereichen 18b und 18c, welche hinsichtlich ihrer Erstreckung in Richtung der Achse 12 der Erstreckung der Stufenkante 84 und der Querkante 88 in Richtung der Achse 12 entsprechen. Die Stufenkante 84 definiert dabei durch ihre Erstreckung in Richtung der Achse 12 die Erstreckung des Bereichs 18b in dieser Richtung. Schließlich bildet ein Abschnitt des Flachmaterialstücks 72 zwischen der Stufenkante 84 und der Querkante 88 im wesentlichen den Abschnitt 18c, umfassend insgesamt acht Lagen 16a bis 16h, wobei die Erstreckung des Abschnitts 18c in Richtung der Achse 12 der Erstreckung der Querkante 88 in dieser Richtung entspricht.

Um zusätzlich noch am ersten Ende 24 die in Fig. 1 dargestellte Fase zu erhalten, verläuft die Längskante 76 nicht parallel zur fiktiven Längskante 90, sondern weist mit zunehmendem Abstand von der Querkante 78 des Flachmaterialstücks 72 eine zunehmenden Abstand von dieser fiktiven Längskante 90 auf, so daß sich mit zunehmendem Wickeln der Lagen 16a bis 16h im Bereich des ersten Endes 24 die in Fig. 1 dargestellte Fase 22 bildet.

Ein derartiger, nochmals schematisch in Fig. 2b dargestellter Formkörper 14 absorbiert dann, wenn die Längskante 76 die Fase 22 bildet und die Längskante 74 die Stirnfläche 30 gemäß der in Fig. 2c dargestellten Charakteristik beim Bewegen des Anschlußbeschlags 34 in Richtung des Pfeils 54 zunächst über einen ersten Wegabschnitt W1 zunehmend Energie, wobei dies dem Reißen der im Flachmaterialstück 72 in der Hauptrichtung 73 und im Formkörper 14 dann in Azimutalrichtung zur Achse 12 verlaufenden Verstärkungsfasern des Formkörpers 14 nahe dem ersten Ende 24 im Bereich der Fase 22 entspricht.

Anschließend erfolgt über einen Wegabschnitt W2, welcher ungefähr der Erstreckung der Querkante 88 in Richtung der Achse 12 und somit dem dritten Bereich 18c entspricht, durch weiteres Aufreißen des Formkörpers 14 über den Abschnitt 18c die größte Absorption von Energie, da die in azimutaler Richtung verlaufenden Verstärkungsfasern in dem Bereich 18c, der die meisten Lagen 16a bis h aufweist, reißen. Danach folgt über einen Wegabschnitt W3 ein weiteres Aufreißen im Bereich 18b, wozu wegen der geringeren Zahl von Lagen 16 weniger Energie benötigt wird und schließlich über den Wegabschnitt W4 möglicherweise noch ein Reißen im Bereich des ersten Abschnitts 18a, welcher wegen der geringsten Zahl von Lagen 16 die geringste Energie absorbiert. Damit ist insgesamt eine degressive Charakteristik der absorbierten Energie erreichbar, wobei die Charakteristik durch die Dimensionierung der Kanten der Außenkontur 70 des aufzuwickelnden Flachmaterialstücks 72 definiert vorgebbar ist.

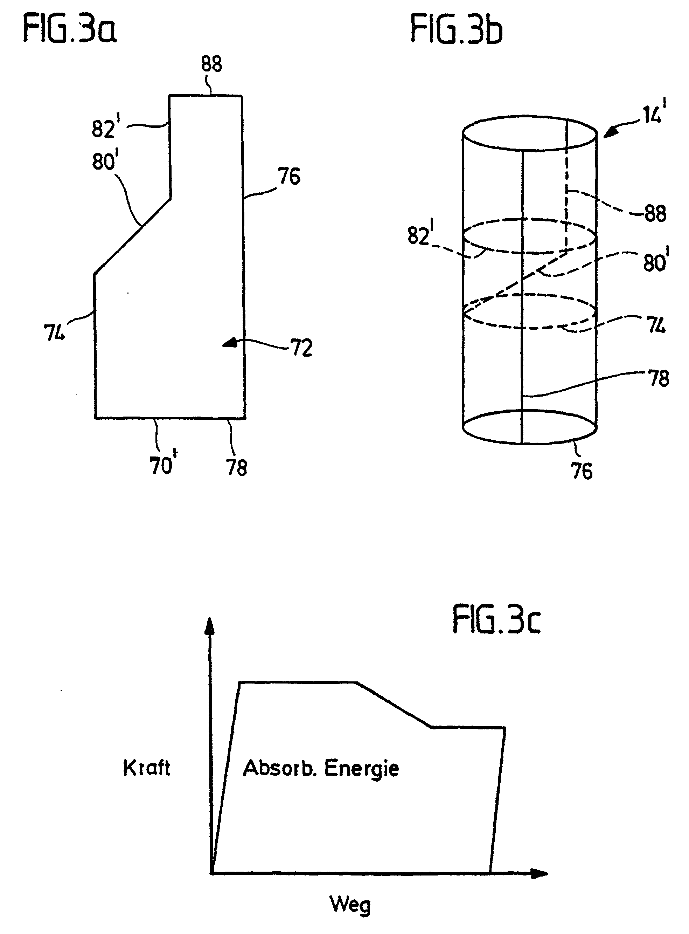

Die Charakteristik der absorbierten Energie läßt sich, wie beispielsweise in Fig. 3 anhand eines zweiten Ausführungsbeispiels eines erfindungsgemäßen Formkörpers 14' dargestellt, durch Änderung der Außenkontur 70 in die Außenkontur 70' des Flachmaterialstücks 72 variieren.

Wird beispielsweise die Außenkontur 70' durch die Längskante 76 und die weiteren Längskanten 74 und 82' bestimmt, wobei die Längskante 74 über eine schräg verlaufende Stufenkante 80' in die Längskante 82 übergeht, so läßt sich die Anordnung der einzelnen Lagen 16 durch Änderung der Abmessung der Querkante 88 und der Stufenkanten 80 und die Zahl der Lagen 16 durch Änderung der Längeabmessungen der einzelnen Längskanten 74, 76, 82', (Fig. 3a) in dem Formkörper 14', (Fig. 3b) ändern und somit auch der Verlauf der absorbierten Energie gemäß Fig. 3c.

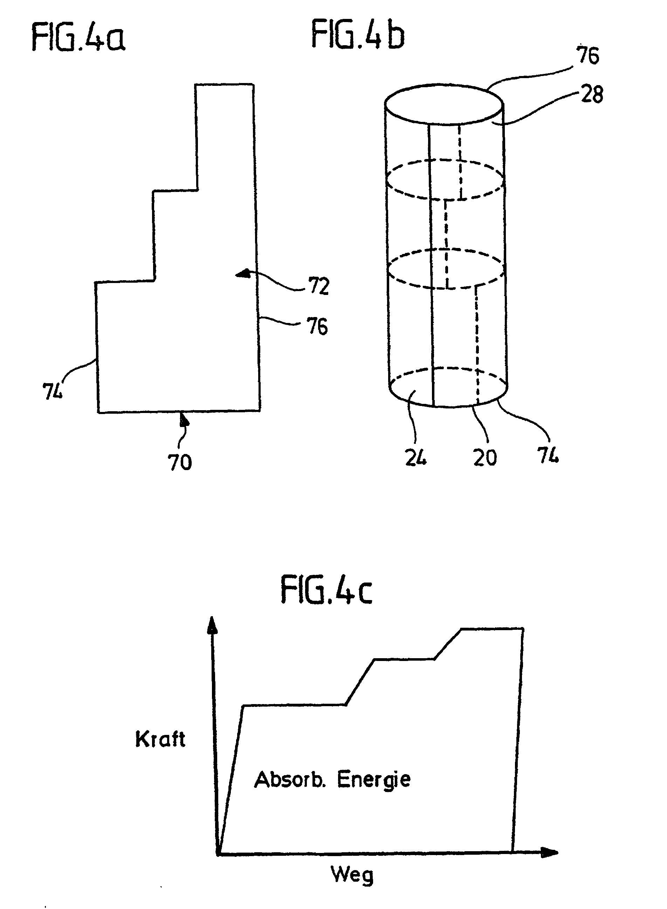

Desgleichen läßt sich, wie in Fig. 4 dargestellt, auch ein degressiver Verlauf der absorbierten Energie umkehren, in dem dasselbe Flachmaterialstück 72 mit der Außenkontur 70 verwendet wird wie beim ersten Ausführungsbeispiel, allerdings in umgekehrter Anordnung, so daß in diesem Fall das erste Ende 24 durch die Längskante 74 gebildet wird, während das zweite Ende 28 durch die Längskante 76 gebildet wird.

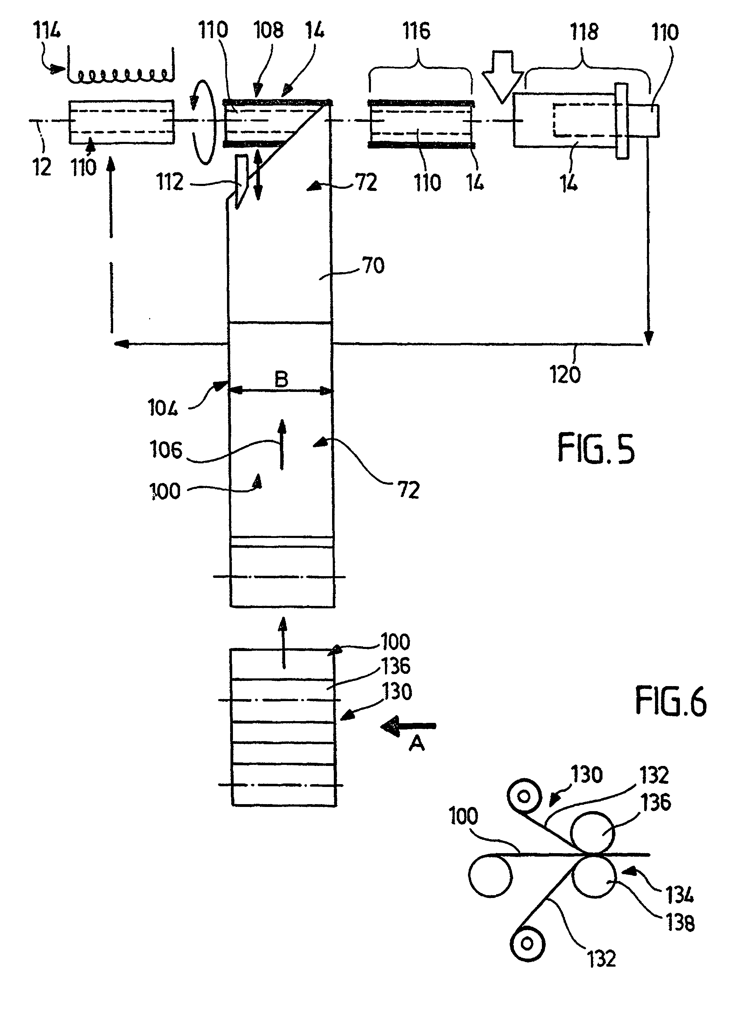

Die Herstellung erfindungsgemäßer Formkörper 14 kann in unterschiedlichster Art und Weise erfolgen. Ein in Fig. 5 dargestelltes erstes Ausführungsbeispiel sieht vor, daß zur Herstellung der Flachmaterialstücke 72 eine Flachmaterialbahn 100, umfassend das Verstärkungsmaterial und eine Imprägnierung desselben mit beispielsweise thermoplastischem Matrixmaterial, von einer Zuführeinrichtung 104 in einer Zuführrichtung 106 einer Wickeleinrichtung 108 mit einer um die Achse 12 rotierend angetriebenen Wickelhülse 110 zugeführt wird, wobei die Flachmaterialbahn 100 quer zur Zuführrichtung 106 eine Breite B aufweist, die genau der Breite B des Flachmaterialstücks 72 entspricht.

Beim Zuführen der Flachmaterialbahn 100 zu der Wickelhülse 110 erfolgt mit einer Schneidvorrichtung 112, dargestellt lediglich durch ein Schneidmesser, das Zuschneiden der Kontur 70 des Flachmaterialstücks, so daß letztlich auf der Wickelhülse 110 das Flachmaterialstück 72 mit der gewünschten Kontur aufgewickelt wird. Um dabei eine innige Verbindung zwischen dem Verstärkungsmaterial und dem Matrixmaterial zu erhalten, werden die Wickelhülsen 110 in einer neben der Wickeleinrichtung 108 angeordneten Vorheizeinrichtung 114 vor dem Aufwickeln des mit Matrixmaterial imprägnierten Flachmaterialstücks 72 vorgeheizt, so daß beim Aufwickeln des mit Matrixmaterial versehenen Flachmaterialstücks 72 auf die Wickelhülse 110 das Matrixmaterial verflüssigt und erschmolzen wird, woraus eine feste Einbettung des als Verstärkungsmaterial dienenden Flachmaterialstücks 74 in die erschmolzene Matrix resultiert.

Nach dem Aufwickeln des Formkörpers 14 wird dieser mitsamt der Wickelhülse 110 in einer Abkühleinrichtung 116, mit beispielsweise einer Abkühlstrecke, abgekühlt, so daß das erschmolzene Matrixmaterial wieder die Möglichkeit hat, auszuhärten.

Anschließend erfolgt in einer Abzieheinrichtung 118 ein Abziehen des fertigen Formkörpers 14 von der Wickelhülse 110, und diese Wickelhülse 110 wird über einen Transportpfad 120 wiederum der Heizeinrichtung 114 zum Aufheizen zugeführt.

Vorzugsweise sind die Wickelhülsen 110 sowohl in der Wickeleinrichtung 108, der Heizeinrichtung 114, der Abkühleinrichtung 116 und der Abzieheinrichtung 118 jeweils koaxial zur Achse 12 angeordnet und werden lediglich längs der Achse verschoben, um diese von einer Einrichtung zur anderen zu bewegen.

Das Versehen der Flachmaterialbahn 100 mit Matrixmaterial wurde bislang nicht im einzelnen beschrieben. Beispielsweise ist, wie in Fig. 5 und 6 dargestellt, eine Imprägniervorrichtung 130 vorgesehen, welche der Flachmaterialbahn 100 aus Verstärkungsmaterial von beiden Seiten ebenfalls in Form jeweils einer Materialbahn 132 thermoplastische Folien zuführt, die in einer Aufwalzeinrichtung 134 mittels zweier Walzen 136 und 138 auf jeweils gegenüberliegende Seiten der Flachmaterialbahn 100 aufgewalzt werden, um die mit Matrixmaterial versehene Flachmaterialbahn 100 zum Zuführen zur Wickeleinrichtung 108 zu erhalten.

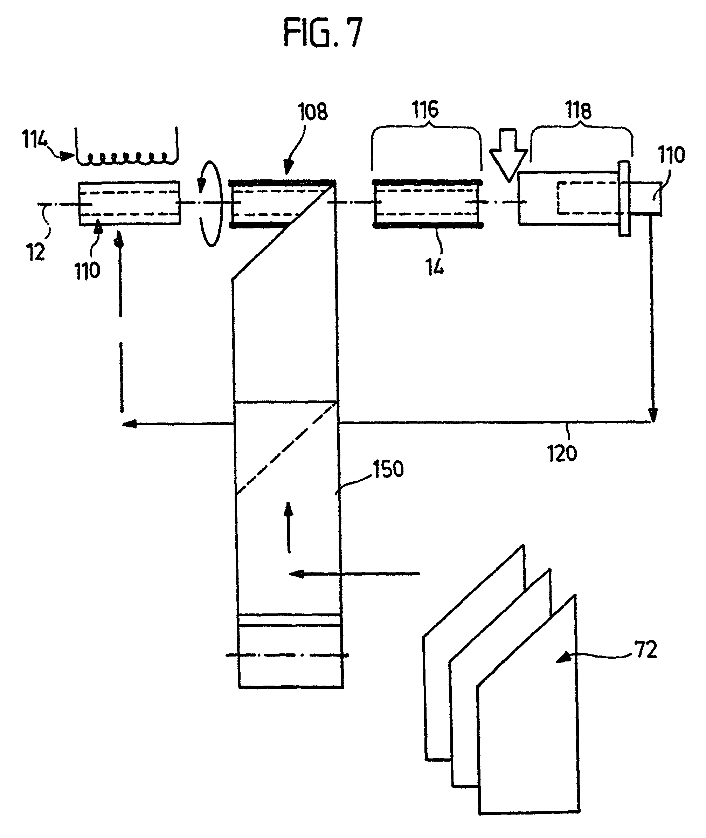

Bei einer Variante des erfindungsgemäßen Verfahrens gemäß Fig. 5 und 6, dargestellt in Fig. 7, erfolgt die Herstellung der mit Matrixmaterial imprägnierten Flachmaterialstücke 72 separat und auch das Zuschneiden derselben, so daß die fertig zugeschnittenen und bereits mit Matrixmaterial imprägnierten Flachmaterialstücke 72 auf eine Transportvorrichtung 150 für diese aufgelegt und von der Transportvorrichtung 150 zur Wickeleinrichtung 108 transportiert werden, um ebenfalls auf die in der Heizeinrichtung 114 vorgeheizten Wickelhülsen 110 gewickelt zu werden.

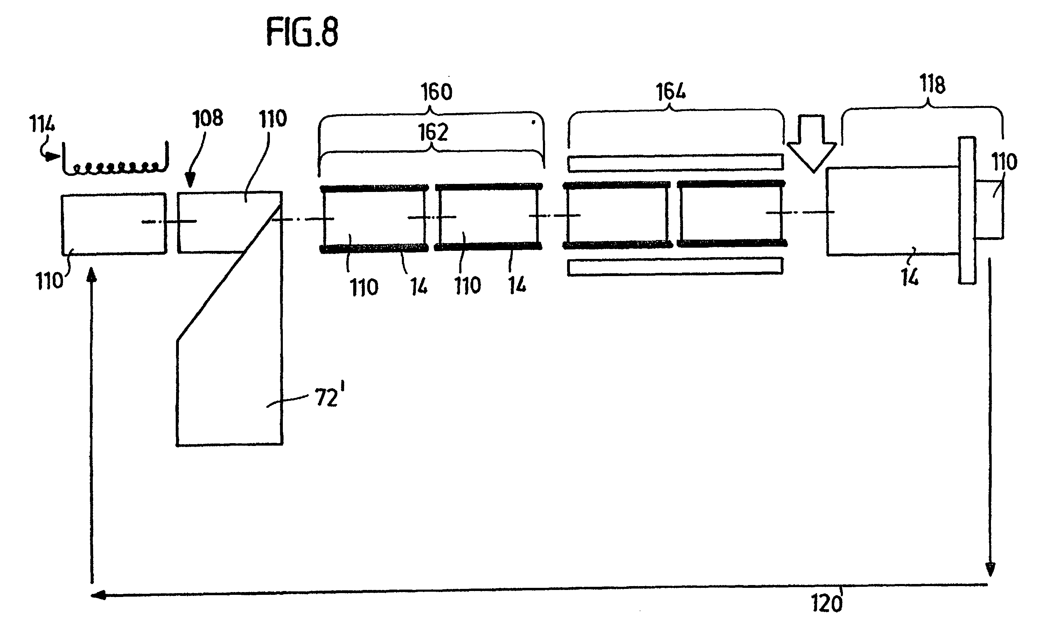

Bei einem weiteren Ausführungsbeispiel des erfindungsgemäßen Verfahrens, dargestellt in Fig. 8, werden Flachmaterialstücke 72' auf die Wickelhülsen 110 gewickelt, wobei in diesem Fall die Flachmaterialstücke 72' mit einem duroplastischen Matrixmaterial imprägniert sind, welches selbsttätig aushärtet.

In diesem Fall dient die Heizeinrichtung 114 lediglich zum Vorwärmen der Wickelhülsen 110 um den duroplastischen Härteprozeß zu beschleunigen.

In einer auf die Wickeleinrichtung 108 folgenden Härteeinrichtung 160 erfolgt ein Aushärten des duroplastischen Matrixmaterials der bereits gewickelten Formkörper 14, wobei aus Gründen der Zeitersparnis vorzugsweise mehrere mit Formkörpern 14 bewickelte Wickelhülsen 110 zu einer Wickelhülsengruppe 162 zusammengefaßt werden, die die Härteeinrichtung 160 durchläuft und anschließend in einer Abkühleinrichtung 164 insgesamt abgekühlt wird. Damit werden die relativ langen Zeiträume zum Aushärten und Abkühlen der mit duroplastischem Matrixmaterial versehenen Formkörper 14 optimal ausgenutzt, so daß trotzdem eine hohe Produktionsrate von Formkörpern 14 möglich ist.

Im Anschluß an die Abkühleinrichtung 164 folgt dann die Abzieheinrichtung 118, bei welcher die fertigen Formkörper 14 von den Wickelhülsen 110 abgezogen werden und die Wickelhülsen 110 wiederum über den Transportpfad 120 der Heizeinrichtung 114 zugeführt werden.

Zusätzlich kann auf die Abzieheinrichtung folgend noch eine Bearbeitungseinrichtung vorgesehen sein, welche beispielsweise ein Bearbeiten der Fase 22 oder anstelle der Fasse 22 im Bereich 18d das Einbringen von sogenannten in Richtung der Achse 12 verlaufenden Triggerschlitzen ermöglicht.

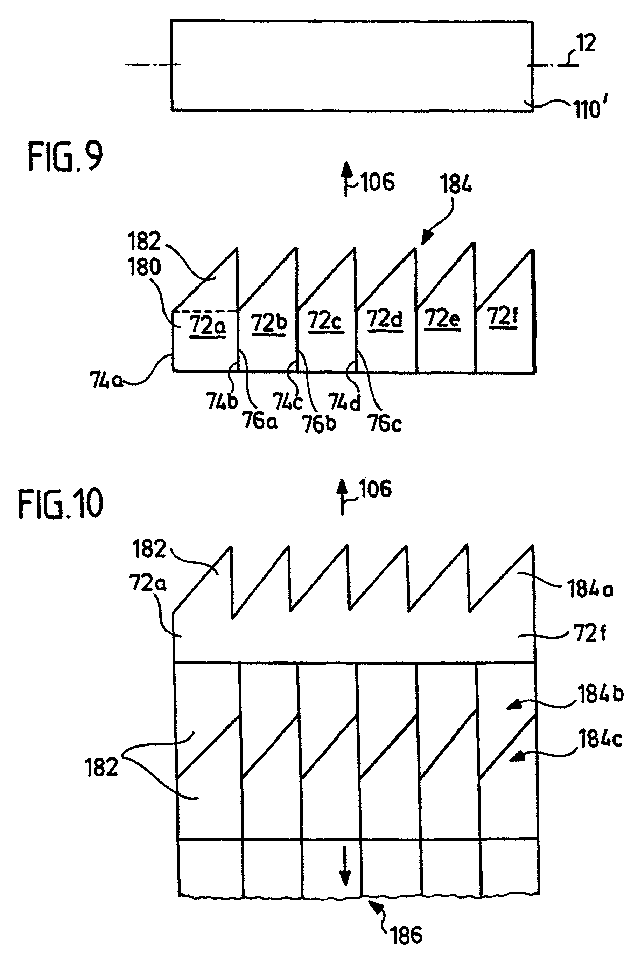

Bei einem dritten Ausführungsbeispiel des erfindungsgemäßen Verfahrens, dargestellt in Fig. 9, sind mehrere Flachmaterialstücke 72a bis f so nebeneinander angeordnet, daß sie im Bereich ihrer ungefähr parallel zueinander verlaufenden Längskanten 74, 76 zusammenhängen, wobei beispielsweise die Längskante 76a des vorhergehenden Flachmaterialstücks 72a mit der Längskante 74b des darauffolgenden Flachmaterialstücks 72b zusammenhängt.

Insbesondere hängen die Flachmaterialstücke 72 in ihren Abschnitten 180 zusammen, in denen die Längskanten 74, 76 parallel zueinander verlaufen und mit welchen keine Änderung in einzelnen Bereichen des Formkörpers hinsichtlich der Zahl der Lagen möglich ist. Dagegen ist im Bereich der Abschnitte 182, die aufgewickelt zum Formkörper eine unterschiedliche Zahl von Lagen in unterschiedlichen Bereichen des Formkörpers ergeben, vorzugsweise kein Zusammenhängen der Flachmaterialstücke vorgesehen.

Eine derartige aus zusammenhängenden Flachmaterialstücken 72a bis 72f gebildete Flachmaterialstückanordnung 184 läßt sich nun als Ganzes in der Wickelrichtung 106 der Wickelhülse 110' zuführen, die in Richtung der Achse 12 eine Ausdehnung hat, die es erlaubt, alle Flachmaterialstücke 72a bis 72f gleichzeitig zu wickeln.

Damit entsteht auf der Wickelhülse 110' eine Vielzahl von Formkörpern 10, die alle miteinander zusammenhängen.

Auf dieser Wickelhülse 110' lassen sich die gewickelten Formkörper dann gemeinsam aushärten und auch gemeinsam von der Wickelhülse 110' abziehen, so daß nach dem Abziehen der Gesamtheit von Formkörpern, gebildet aus den Flachmaterialstücken 72a bis 72f, eine Trennung derselben, beispielsweise durch Zersägen, im Bereich aneinanderliegender Längskanten 74, 76 durchgeführt werden kann.

Bei einer besonders vorteilhaften Lösung, dargestellt in Fig. 10, ist außerdem noch dargestellt, wie sich aus einer einzigen Materialbahn 186, deren Breite der Breite der nebeneinanderliegenden Flachmaterialstücke 72a bis 72f entspricht, mehrere Flachmaterialstückanordnungen 184a bis c ohne einen einzigen Verschnitt herstellen lassen, wobei allerdings die Abschnitte 182 der einzelnen Flachmaterialstücke, die zu Bereichen mit unterschiedlicher Zahl der Lagen des Formkörpers beitragen, dann, wenn sie aufeinanderfolgen, eine komplementäre Form aufweisen müssen.

Ferner entstehen bei einer derartigen Durchführung des erfindungsgemäßen Verfahrens unterschiedliche Arten von Formkörpern, nämlich solche, bei denen die Abschnitte 182 radial innen und solche, bei denen die Abschnitte 182 außen liegen.

## Patentansprüche

1. Verfahren zum Herstellen von mit definierter Charakteristik energieabsorbierenden Strukturelementen (10), welche als zur Energieabsorption in Richtung ihrer Längsachsen (12) aufreißenden Formkörper (14) aus einem Matrixmaterial und einem in diesem eingebetteten Verstärkungsmaterial so hergestellt werden,
daß in unterschiedlichen Bereichen (18) des Formkörpers (14) definiert zu diesem verlaufende und mit definiert unterschiedlicher Anzahl angeordnete Lagen (16) des Verstärkungsmaterials angeordnet werden, und daß das Verstärkungsmaterial für den gesamten Formkörper (14) in einem Wickelvorgang zu dem Formkörper gewickelt wird,
**dadurch gekennzeichnet, daß** das Verstärkungsmaterial dem Wickelvorgang in Form eines einzigen in einem einzigen Wickelvorgang zu einem der Formkörper (14) zu wickelnden Flachmaterialstücks (72) zugeführt wird und daß das den Formkörper (14) ergebende Flachmaterialstück mit einer einen Abschnitt mit maximaler Breite quer zur Wickelrichtung und mindestens einen Abschnitt mit geringerer Breite quer zur Wickelrichtung (106) aufweisenden Kontur versehen wird, so daß durch diese Kontur in dem Formkörper nach dem Wickelvorgang der geforderte definierte Verlauf der Lagen (16) und die definiert unterschiedliche Anzahl der Lagen (16) vorliegen.

2. Verfahren nach Anspruch 1, **dadurch gekennzeichnet, daß** das Flachmaterialstück (72) im Verlauf der Zufuhr einer Flachmaterialbahn zu dem Wickelvorgang in dem die Bereiche (18) mit definiert unterschiedlicher Anzahl von Lagen (16) beeinflussenden Abschnitt konturiert wird.

3. Verfahren nach Anspruch 1, **dadurch gekennzeichnet, daß** das Flachmaterialstück (72) vor der Zufuhr zu dem Wickelvorgang in dem die Bereiche (18) mit definiert unterschiedlicher Anzahl von Lagen (16) beeinflussenden Abschnitt konturiert wird.

4. Verfahren nach Anspruch 2 oder 3, **dadurch gekennzeichnet, daß** das Flachmaterialstück (72) durch einen Schneidvorgang konturiert wird.

5. Verfahren nach einem der voranstehenden Ansprüche, dadurch gegekennzeichnet, daß eine maximale Erstreckung des konturierten Flach-Flachmaterialstück (72) in Richtung einer Wickelachse (12) der maximalen Erstreckung des Formteils (14) in Richtung der Wickelachse (12) entspricht.

6. Verfahren nach einem der voranstehenden Ansprüche, **dadurch gekennzeichnet, daß** mehrere Flachmaterialstücke (72) zum gleichzeitigen Wickeln mehrerer Formkörper (14) parallel dem Wickelvorgang zugeführt werden.

7. Verfahren nach Anspruch 6, **dadurch gekennzeichnet, daß** die mehreren Flachmaterialstücke (72) als zusammenhängende Flachmaterialstückanordnung (184) dem Wickelvorgang zugeführt werden.

8. Verfahren nach Anspruch 7, **dadurch gekennzeichnet, daß** die mehreren Flachmaterialstücke (72) im Bereich der Abschnitte (180) zusammenhängen, die in allen Bereichen (18) des Formkörpers (14) die Zahl der Lagen in gleicher Weise erhöhen.

9. Verfahren nach Anspruch 8, **dadurch gekennzeichnet, daß** die Flachmaterialstücke (72) im Abschnitt (180) maximaler Breite zusammenhängen.

10. Verfahren nach einem der voranstehenden Ansprüche, **dadurch gekennzeichnet, daß** das Verstärkungsmaterial mit dem Matrixmaterial vor dem Wickeln des Verstärkungsmaterials zum Formkörper (14) imprägniert wird.

11. Verfahren nach Anspruch 10, **dadurch gekennzeichnet, daß** das Wickeln des Verstärkungsmaterials bei flüssigem oder tränkfähigem Matrixmaterial durchgeführt wird.

12. Verfahren nach Anspruch 11, **dadurch gekennzeichnet, daß** das Matrixmaterial beim Wickeln verflüssigt wird.

13. Verfahren nach Anspruch 12, **dadurch gekennzeichnet, daß** das Matrixmaterial während des gesamten Wickelns des Verstärkungsmaterials auf Schmelztemperatur gehalten wird.

14. Verfahren nach Anspruch 13, **dadurch gekennzeichnet, daß** das Matrixmaterial beim Wickeln des Verstärkungsmaterials auf Schmelztemperatur erwärmt wird.

15. Verfahren nach Anspruch 13 oder 14, **dadurch gekennzeichnet, daß** das Matrixmaterial durch eine aufgeheizte Wickelhülse (110) auf Schmelztemperatur erwärmt und auf dieser gehalten wird.

16. Verfahren nach Anspruch 15, **dadurch gekennzeichnet, daß** die Wickelhülse vor dem Wickeln auf die Schmelztemperatur des Matrixmaterials aufgeheizt wird.

17. Verfahren nach Anspruch 16, **dadurch gekennzeichnet, daß** die Wickelhülsen vor einem Einbringen in eine Wickeleinrichtung auf Schmelztemperatur des Matrixmaterials aufgeheizt werden.

18. Verfahren nach einem der voranstehenden Ansprüche, **dadurch gekennzeichnet, daß** das Matrixmaterial beim Wickeln des Verstärkungsmaterials so weit erwärmt wird, daß dies in ausreichender Weise verflüssigt ist.

19. Verfahren nach einem der voranstehenden Ansprüche, **dadurch gekennzeichnet, daß** das Matrixmaterial im Formkörper (14) nach dem Wickeln ausgehärtet wird.

20. Verfahren nach Anspruch 19, **dadurch gekennzeichnet, daß** das Matrixmaterial bei auf der Wickelhülse (110) sitzendem Formkörper (14) ausgehärtet wird.

21. Verfahren nach Anspruch 19 oder 20, **dadurch gekennzeichnet, daß** die mit den Formkörpern bewickelten Wickelhülsen beim Aushärten des Matrixmaterials zu Wickelhülsengruppen zusammengefaßt werden, welche gemeinsam die Aushärtephase durchlaufen.

22. Verfahren nach einem der voranstehenden Ansprüche, **dadurch gekennzeichnet, daß** die Formkörper auf den Wickelhülsen sitzend abgekühlt werden.

23. Verfahren nach einem der voranstehenden Ansprüche, **dadurch gekennzeichnet, daß** die Formkörper von den Wickelhülsen abgezogen werden.

24. Verfahren nach einem der Ansprüche 7 bis 23, **dadurch gekennzeichnet, daß** die zusammenhängenden Formkörper vor dem Abziehen von den Wickelhülsen getrennt werden.

25. Verfahren nach einem der Ansprüche 7 bis 23, **dadurch gekennzeichnet, daß** die zusammenhängenden Formkörper nach dem Abziehen von den Wickelhülsen getrennt werden.

## Claims

1. Process for the production of structural elements (10) which absorb energy with defined characteristics and are produced as shaped bodies (14), which crack in the direction of their longitudinal axes (12) in order to absorb energy, from a matrix material and a reinforcing material embedded therein, such that layers (16) of the reinforcing material are arranged in different areas (18) of the shaped body (14) so that they extend in a defined manner in relation to the shaped body (14) and are present in a number which differs in a defined manner, and such that the reinforcing material for the entire shaped body (14) is wound in a single winding procedure to form the shaped body, **characterized in that** the reinforcing material is supplied to the winding procedure in the form of a single piece of flat material (72) to be wound in a single winding procedure to form one of the shaped bodies (14), and that the piece of flat material resulting in the shaped body (14) is provided with a contour having a section with a maximum width transversely to the winding direction and at least one section with a lesser width transversely to the winding direction (106), so that owing to this contour the required defined orientation of the layers (16) and the number of layers (16) which differs in a defined manner are present in the shaped body after the winding procedure.

2. Process as defined in claim 1, **characterized in that** during the supplying of a web of flat material to the winding procedure the piece of flat material (72) is contoured in the section influencing the areas (18) having a number of layers (16) which differs in a defined manner.

3. Process as defined in claim 1, **characterized in that** prior to the supplying to the winding procedure the piece of flat material (72) is contoured in the section influencing the areas (18) having a number of layers (16) which differs in a defined manner.

4. Process as defined in claim 2 or 3, **characterized in that** the piece of flat material (72) is contoured by a cutting procedure.

5. Process as defined in any one of the preceding claims, **characterized in that** a maximum extension of the contoured piece of flat material (72) in the direction of a winding axis (12) corresponds to the maximum extension of the shaped body (14) in the direction of the winding axis (12).

6. Process as defined in any one of the preceding claims, **characterized in that** several pieces of flat material (72) are supplied to the winding procedure in parallel for the simultaneous winding of several shaped bodies (14).

7. Process as defined in claim 6, **characterized in that** the several pieces of flat material (72) are supplied to the winding procedure as a connected arrangement (184) of pieces of flat material.

8. Process as defined in claim 7, **characterized in that** the several pieces of flat material (72) are connected in the region of the sections (180) which increase the number of layers in all the areas (18) of the shaped body (14) in an equal manner.

9. Process as defined in claim 8, **characterized in that** the pieces of flat material (72) are connected in the section (180) with maximum width.

10. Process as defined in any one of the preceding claims, **characterized in that** the reinforcing material is impregnated with the matrix material prior to the winding of the reinforcing material to form the shaped body (14).

11. Process as defined in claim 10, **characterized in that** the winding of the reinforcing material is carried out with a liquid or saturatable matrix material.

12. Process as defined in claim 11, **characterized in that** the matrix material is liquefied during the winding.

13. Process as defined in claim 12, **characterized in that** the matrix material is kept at melting temperature during the entire winding of the reinforcing material.

14. Process as defined in claim 13, **characterized in that** the matrix material is heated to melting temperature during the winding of the reinforcing material.

15. Process as defined in claim 13 or 14, **characterized in that** the matrix material is heated to melting temperature by means of a heated winding tube (110) and kept at this temperature.

16. Process as defined in claim 15, **characterized in that** the winding tube is heated to the melting temperature of the matrix material prior to the winding.

17. Process as defined in claim 16, **characterized in that** the winding tubes are heated to melting temperature of the matrix material prior to insertion into a winding device.

18. Process as defined in any one of the preceding claims, **characterized in that** the matrix material is heated during the winding of the reinforcing material to such an extent that this is adequately liquefied.

19. Process as defined in any one of the preceding claims, **characterized in that** the matrix material is hardened in the shaped body (14) following the winding.

20. Process as defined in claim 19, **characterized in that** the matrix material is hardened with a shaped body (14) seated on the winding tube (110).

21. Process as defined in claim 19 or 20, **characterized in that** the winding tubes wound with the shaped bodies are combined during the hardening of the matrix material to form groups of winding tubes which pass together through the hardening phase.

22. Process as defined in any one of the preceding claims, **characterized in that** the shaped bodies are cooled when seated on the winding tubes.

23. Process as defined in any one of the preceding claims, **characterized in that** the shaped bodies are withdrawn from the winding tubes.

24. Process as defined in any one of claims 7 to 23, **characterized in that** the connected shaped bodies are separated prior to the withdrawal from the winding tubes.

25. Process as defined in any one of claims 7 to 23, **characterized in that** the connected shaped bodies are separated following the withdrawal from the winding tubes.

## Revendications

1. Procédé pour fabriquer des éléments structurels (10) qui absorbent de l'énergie avec une caractéristique définie, les éléments structurels étant fabriqués, en tant que corps de forme (14) qui se fend pour absorber l'énergie dans la direction des axes longitudinaux des éléments (12) et qui est constitué d'un matériau formant matrice et d'un matériau de renforcement inséré dans le matériau formant matrice par le fait qu'on dispose dans différentes zones (18) du corps de forme (14) des couches (16) du matériau de renforcement, qui s'étendent d'une manière définie par rapport à ce corps de forme et sont prévues en nombres différents d'une manière définie, et par le fait qu'on enroule le matériau de renforcement prévu pour l'ensemble du corps de forme (14) selon un processus d'enroulement pour former le corps de forme, **caractérisé en ce qu'**on amène le matériau de renforcement, pour le processus d'enroulement, sous la forme d'un morceau de matériau plat (72) devant être enroulé au moyen d'un seul processus d'enroulement pour former l'un des corps de forme et **en ce qu'**on équipe le morceau de matériau plat fournissant le corps de forme (14) d'un contour qui possède une partie de largeur maximale transversalement par rapport à la direction d'enroulement et au moins une partie de largeur réduite transversalement par rapport à la direction d'enroulement (106), de telle sorte qu'à l'aide de ce contour, l'allure définie requise des couches (16) et le nombre de couches (16), qui est différent de façon définie, sont présents dans le corps de forme après le processus d'enroulement.

2. Procédé selon la revendication 1, **caractérisé en ce qu'**on profile le morceau de matériau plat (72), lors de l'amenée d'une bande de matériau plat dans le processus d'enroulement, dans la partie qui influe sur les zones (18) possédant un nombre de couches (16) qui est différent de façon définie.

3. Procédé selon la revendication 1, **caractérisé en ce qu'**on profile le morceau de matériau plat (72) avant l'amenée dans le processus d'enroulement, dans la partie qui influe sur les zones (18) ayant un nombre de couches (16) qui est différent de façon définie.

4. Procédé selon la revendication 2 ou 3, **caractérisé en ce qu'**on profile le morceau de matériau plat (72) au moyen d'une opération de découpage.

5. Procédé selon l'une des revendications précédentes, **caractérisé en ce qu'**une étendue maximale du morceau de matériau plat profilé (72) correspond à l'étendue maximale de la pièce de forme (14) dans la direction de l'axe d'enroulement (12).

6. Procédé selon l'une des revendications précédentes, **caractérisé en ce qu'**on amène dans le processus d'enroulement plusieurs morceaux de matériau plat (72) en parallèle pour l'enroulement simultané de plusieurs corps de forme (14).

7. Procédé selon la revendication 6, **caractérisé en ce que** la pluralité de morceaux de matériau plat (72) sont amenés dans le processus d'enroulement sous la forme d'un ensemble (184) de morceaux de matériau plat reliés entre eux.

8. Procédé selon la revendication 7, **caractérisé en ce que** la pluralité de morceaux de matériau plat (72) sont reliés entre eux dans la zone des parties (180), qui augmentent de la même manière le nombre des couches dans toutes les zones (18) du corps de forme (14).

9. Procédé selon la revendication 8, **caractérisé en ce que** les morceaux de matériau plat (72) sont reliés entre eux dans la partie (180) de largeur maximale.

10. Procédé selon l'une des revendications précédentes, **caractérisé en ce qu'**on imprègne le matériau de renforcement avec le matériau formant matrice avant l'enroulement du matériau de renforcement pour former le corps de forme (14).

11. Procédé selon la revendication 10, **caractérisé en ce que** l'enroulement du matériau de renforcement est exécuté dans le cas d'un matériau formant matrice liquide ou pouvant être imprégné.

12. Procédé selon la revendication 1, **caractérisé en ce qu'**on liquéfie le matériau formant matrice lors de l'enroulement.

13. Procédé selon la revendication 12, **caractérisé en ce qu'**on maintient le matériau formant matrice à la température de fusion pendant l'ensemble de l'enroulement du matériau de renforcement.

14. Procédé selon la revendication 13, **caractérisé en ce qu'**on chauffe le matériau formant matrice à la température de fusion lors de l'enroulement du matériau de renforcement.

15. Procédé selon la revendication 13 ou 14, **caractérisé en ce qu'**on chauffe le matériau formant matrice à la température de fusion et on l'y maintient, au moyen d'une douille d'enroulement chauffée (110).

16. Procédé selon la revendication 15, **caractérisé en ce qu'**avant l'enroulement on chauffe la douille d'enroulement à la température de fusion du matériau formant matrice.

17. Procédé selon la revendication 16, **caractérisé en ce qu'**on chauffe les douilles d'enroulement à la température de fusion avant une insertion dans un dispositif d'enroulement.

18. Procédé selon l'une des revendications précédentes, **caractérisé en ce qu'**on chauffe le matériau formant matrice lors de l'enroulement du matériau de renforcement au point que le matériau est liquéfié de façon suffisante.

19. Procédé selon l'une des revendications précédentes, **caractérisé en ce qu'**après l'enroulement, on fait durcir le matériau formant matrice dans le corps de forme (14).

20. Procédé selon la revendication 19, **caractérisé en ce qu'**on fait durcir le matériau formant matrice lorsque le corps de forme (14) est en appui sur la douille d'enroulement (110).

21. Procédé selon la revendication 19 ou 20, **caractérisé en ce qu'**on réunit entre elles les douilles d'enroulement, qui sont enroulées avec les corps de forme, lors du durcissement du matériau formant matrice pour former des groupes de douilles d'enroulement, qui traversent et subissent en commun la phase de durcissement.

22. Procédé selon l'une des revendications précédentes, **caractérisé en ce qu'**on refroidit les corps de forme en appui sur les douilles d'enroulement.

23. Procédé selon l'une des revendications précédentes, **caractérisé en ce qu'**on retire les corps de forme des douilles d'enroulement.

24. Procédé selon l'une des revendications 7 à 23, **caractérisé en ce qu'**on sépare les corps de forme réunis entre eux avant le retrait à partir des douilles d'enroulement.

25. Procédé selon l'une des revendications 7 à 23, **caractérisé en ce qu'**on sépare les corps de forme réunis entre eux après le retrait hors des douilles d'enroulement.
